# EUROPEAN PATENT APPLICATION

(11) **EP 1 274 001 A1**
(43) Date of publication of application: **08.01.2003**
(21) Application number: 01908218.9
(22) Date of filing: 01.03.2001
(51) Int. Cl.: G06F 3/02, G06F 3/023

(54) **INFORMATION RETRIEVAL/TRANSMISSION METHOD AND RECORDING MEDIUM RECORDING PROGRAM INSTRUCTING PROCEDURE FOR INFORMATION RETRIEVAL/TRANSMISSION**

(30) Priority: 01.03.2000 JP 2000056480; 24.03.2000 WO PCT/JP00/01827
(71) Applicant: Tenkey Rabbit System Co., Ltd., Tokyo 151-0053 (JP)
(72) Inventor: Miyata, Yumiko, Chiba Shi, Chiba 260 0843 (JP); Aoki, Masahiro, Fussa-shi, Tokyo 197-0011 (JP)
(74) Representative: Möbus, Steffen
(86) International application number: JP0101589
(87) International publication number: WO01065351

(57) **Abstract**

Displays button or key images that correspond to a ten-key 11 arrangement on the screen 2 of a personal computer 1, and when a button or key image is selected, a level image that corresponds to the selected button or key image is displayed, so it is possible for an operator 3 to search for or transfer data by operating the ten-key 11 on a keyboard 10 for example.

## Description

### TECHNICAL FIELD

This invention relates to a data search/transfer apparatus and data search/transfer method that search for and transfer data by selecting buttons or key images that are displayed on a screen, and to a recording medium on which a program indicating the procedure of the data search/transfer method is recorded.

### BACKGROUND TECHNOLOGY

In the case of searching for a homepage on the Internet, for example, operation of clicking the mouse on specific places on a specific search screen is necessary.

This becomes an obstacle, for instance in the case when a new PC user, middle-aged or old-aged person, handicapped person, person not adept with clicking a mouse or person not able to click a mouse searches for a homepage on the Internet.

Therefore, it is the object of this invention to provide: a data search/transfer apparatus and data search/transfer method, by which even a new PC user, middle-aged or old-aged person, handicapped person, person not adept with clicking a mouse or person not able to click a mouse can easily and accurately perform a data search and data transfer; and a recording medium on which a program indicating the procedure of the data search/transfer method is recorded.

### SUMMARY OF THE INVENTION

The data search/transfer apparatus of this invention comprises: a memory unit that stores contents (images) including button or key images and level images; a key-arrangement-image-data memory unit that stores various shapes of button or key images that correspond to the arrangement of the keys displayed on the screen of the data apparatus; a key-arrangement-image-data selection unit that selects arbitrary data from the various shape data of the button or key images that are stored in the key-arrangement-image-data memory unit, when the contents (images) that are stored in the memory unit are displayed on the screen; an operation-assignment unit that assigns specific operation functions for each of the button or key images that were selected when selecting arbitrary data by the key-arrangement-image-data selection unit; and a contents (image) display control unit that adds shapes, which are based on the data selected by the key-arrangement-image-data selection unit, and operation functions, which are assigned by the operation-assignment unit, and displays the contents (images) stored in the memory on the screen.

Moreover, it is also possible to configure the memory unit such that contents (images), including button or key images and level images that are called up when accessing a homepage on the Internet by an access-control means, can be stored.

Also, when key-color data, which are contained in the key-color-setting unit, are selected by the key-arrangement-image-data selection unit, the contents (image) display control unit can color code and display the button or key images based on the selected key colors.

Furthermore, when a button or key image that corresponds to the key arrangement displayed on the screen of the data apparatus is selected, the contents (image) display control unit can output sound, corresponding to the selected contents, via an audio-output unit.

Also, when the selection of any of the button or key images that correspond to the key arrangement that is displayed on the screen of the data apparatus is identified by the voice-recognition unit, the contents (image) display control unit can execute a specific operation that corresponds to the identified button or key image.

The data search/transfer method of this invention comprises: a first process of accessing data having contents (images) that include button and key images and level images; a second process of displaying button or key images that correspond to the key-arrangement on the screen of the data apparatus through access; and a third process of displaying the level image that corresponds to any of the selected button or key images when any of the button or key images are selected.

Also, in the first process, it is possible to include a fourth process of handling data as a homepage on the Internet.

Moreover, in the second process, it is possible to include a fifth process of handling the button or key images as images corresponding to a ten-key or dial-key arrangement.

Also, in the third process, it is possible to include a sixth process of handling level images as contents that transfer the intention of the operator.

Furthermore, in the second, fifth and sixth processes, it is possible to include a seventh process of changing and displaying colors for each key.

Also, in the second, fifth and sixth processes, it is possible to include an eighth process of arbitrarily assigning separate operations for the button or key images.

Moreover, in the second and third processes, it is possible to include a ninth process of notifying by sound of the minimum required data on the screen each time button or key images and level images are displayed.

Furthermore, in the second process, it is possible to include a tenth process of performing; a selection-instruction function of performing a selection instruction of whether to display button or key images; an character/number input instruction function, a number input instruction, a vicarious character input function, or a name and address input function by adding pre-registered data.

Also, in the second process, it is possible to include an eleventh process that provides a function of narrowing down a lot of data to only data corresponding to conditions or that are determined to be in a range of conditions of the button or key images, and providing a function as an inquiry system for collecting necessary data.

Moreover, in the second process, it is possible to include a twelfth process of displaying the button or key images in a small window.

Furthermore, in the second process, it is possible to include a thirteenth process of displaying the button or key images in a matrix shape, horizontal row or a vertical column.

Also, in the third process, it is possible to include a fourteenth process of saving the selection of button or key images as transitional data.

Moreover, in the fourteenth process, it is possible to include a fifteenth process of using the transitional data as code data for linking with answer data.

The recording medium of this invention recorded with a program indicating the procedure of the data search/transfer method, is such that a program, which is capable of executing the data search/transfer method of any of the claims 6 to 17, is recorded on it.

The data apparatus of this invention is the data search/transfer apparatus of any of the claims 1 to 5.

The program of this invention is such that it causes a computer to execute the aforementioned first to third processes.

The program of this invention is such that it causes a computer to execute the aforementioned first to sixth processes.

The program of this invention is such that it causes a computer to execute the aforementioned first to thirteenth processes.

The program of this invention is such that it causes a computer to execute the aforementioned first to fifteenth processes.

### (Pg. 5)

With the data search/transfer apparatus, data search/transfer method and recording medium, on which a program is recorded that indicates the procedure of the data search/transfer method, of this invention, button or key images corresponding to the key arrangement are displayed on the screen of the data apparatus, and when a button or key image is selected, the level image that corresponds to the selected button or key image is displayed.

### BRIEF DESCRIPTION OF THE DRAWINGS

Fig. 1 is a drawing for explaining a summary of a first embodiment of the data search/transfer method of the invention.
Fig. 2 is a drawing for explaining the data search/transfer method in Fig. 1.
Fig. 3 is a drawing for explaining the data search/transfer method in Fig. 1.
Fig. 4 is a drawing for explaining the data search/transfer method in Fig. 1.
Fig. 5 is a drawing for explaining the data search/transfer method in Fig. 1.
Fig. 6 is a drawing for explaining the data search/transfer method in Fig. 1.
Fig. 7 is a drawing for explaining the data search/transfer method in Fig. 1.
Fig. 8 is a drawing for explaining the data search/transfer method in Fig. 1.
Fig. 9 is a drawing for explaining the data search/transfer method in Fig. 1.
Fig. 10 is a flowchart for explaining the data search/transfer method in Fig. 1.
Fig. 11 is a flowchart for explaining the data search/transfer method in Fig. 1.
Fig. 12 is a flowchart for explaining the data search/transfer method in Fig. 1.
Fig. 13 is a flowchart for explaining the data search/transfer method in Fig. 1.
Fig. 14 is a flowchart for explaining the data search/transfer method in Fig. 1.
Fig. 15 is a flowchart for explaining the data search/transfer method in Fig. 1.
Fig. 16 is a flowchart for explaining the data search/transfer method in Fig. 1.
Fig. 17 is a flowchart for explaining the data search/transfer method in Fig. 1.
Fig. 18 is a flowchart for explaining the data search/transfer method in Fig. 1.
Fig. 19 is a drawing showing an example of an application of the data search/transfer method in Fig. 1.
Fig. 20 is a drawing showing the second page of Fig. 19.
Fig. 21 is a drawing showing a different form of the display in Fig. 2.
Fig. 22 is a drawing showing a different form of the display in Fig. 2.
Fig. 23 is a drawing for explaining the data search/transfer apparatus for the data search/transfer method in Fig. 1.
Fig. 24 is a drawing for explaining the data search/transfer apparatus for the data search/transfer method in Fig. 1.
Fig. 25 is a drawing for explaining the data search/transfer apparatus for the data search/transfer method in Fig. 1.
Fig. 26 is a drawing for explaining the data search/transfer apparatus for the data search/transfer method in Fig. 1.
Fig. 27 is a drawing for explaining the data search/transfer method in Fig. 1.
Fig. 28 is a drawing for explaining the data search/transfer method in Fig. 1.
Fig. 29 is a drawing for explaining a data search/transfer method using touch operation.
Fig. 30 is a drawing for explaining a data search/transfer method using touch operation.
Fig. 31 is a drawing showing a different form of the display in Fig. 21.
Fig. 32 is a drawing showing a different form of the display in Fig. 21.

### PREFERRED EMBODIMENTS OF THE INVENTION

The embodiments of the invention will be described below.

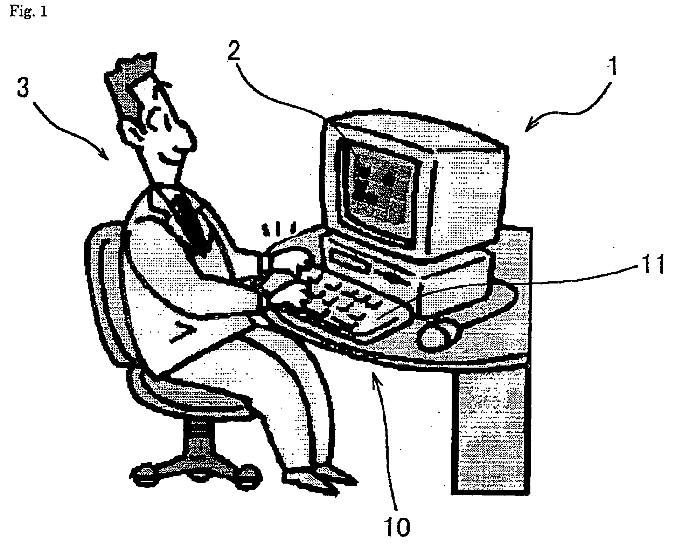

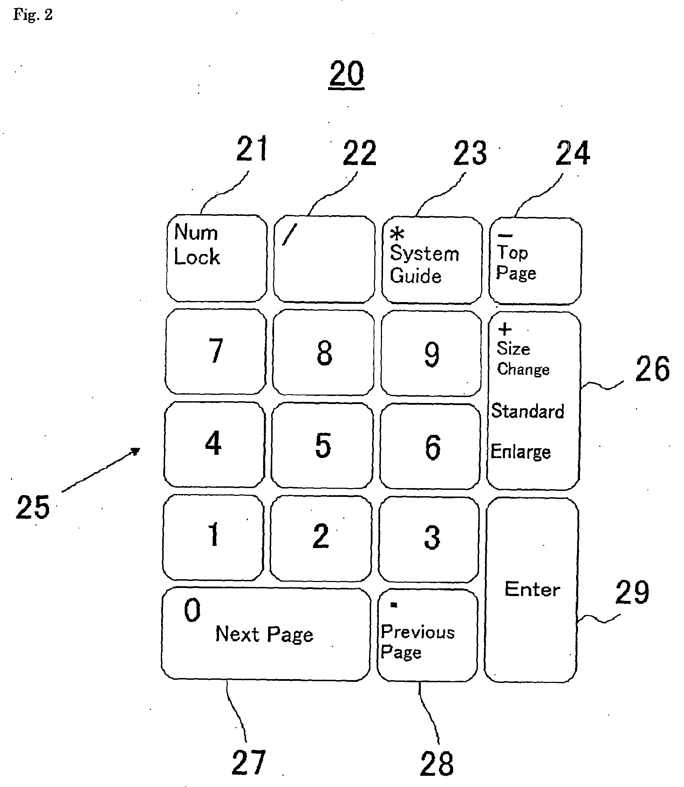

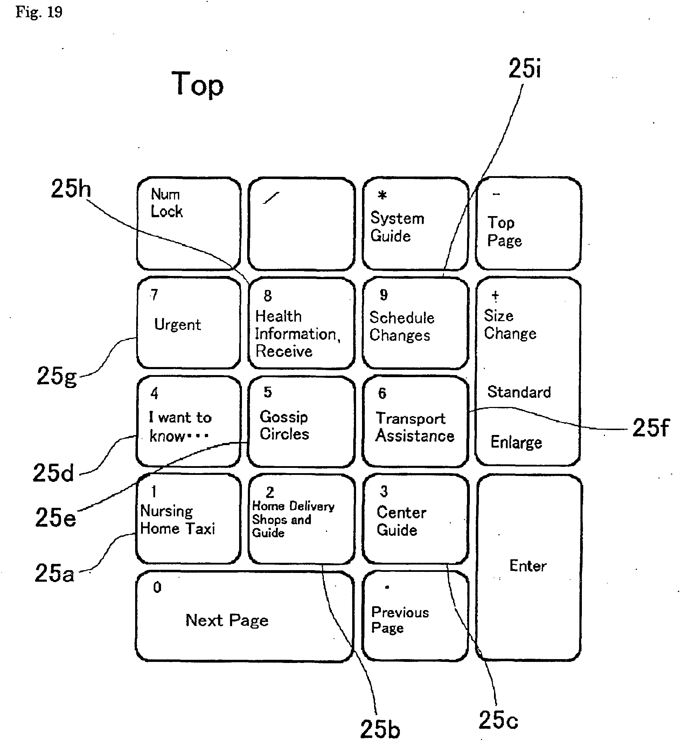

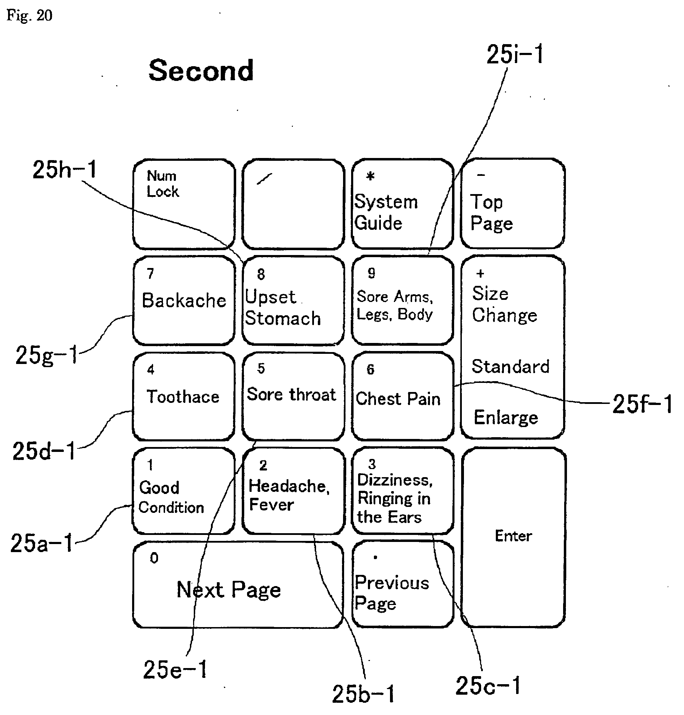

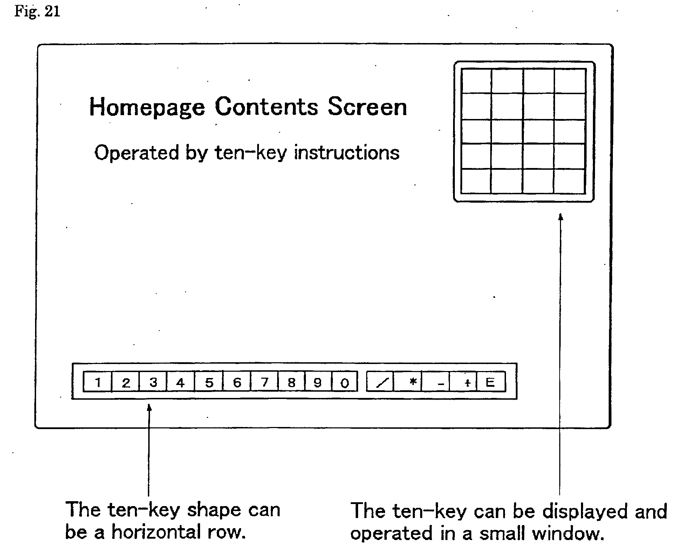

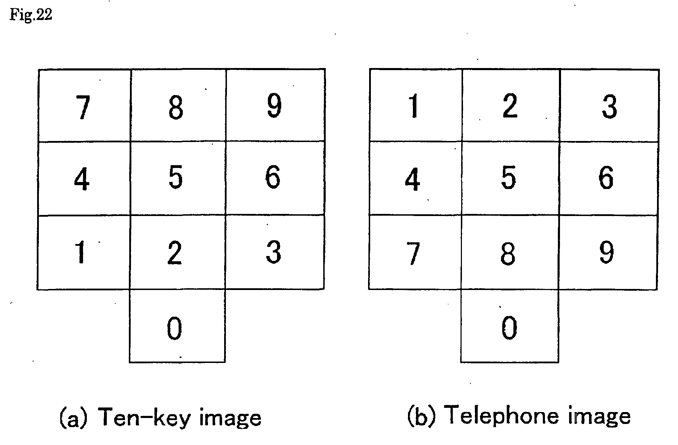

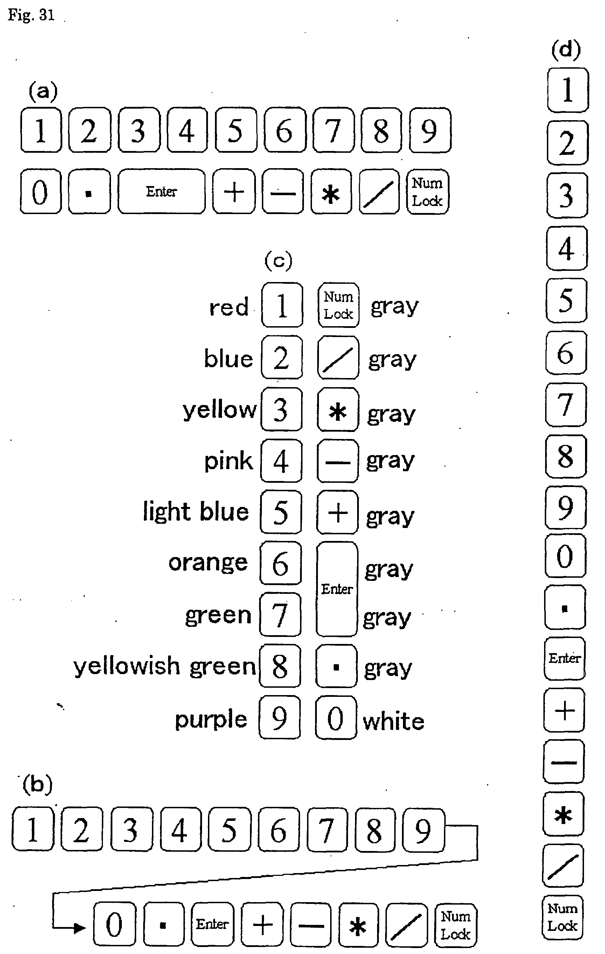

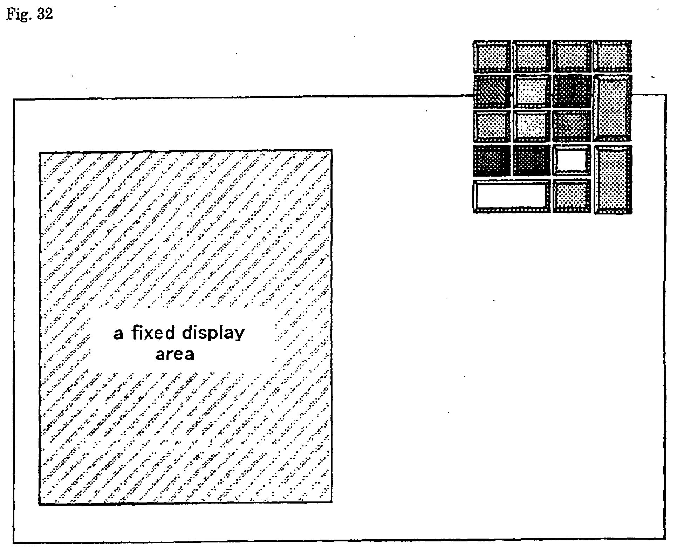

Fig. 1 is a drawing for explaining a summary of an embodiment of the data search/transfer method of the invention; Fig. 2 to Fig. 9 are drawings for explaining the data search/transfer method in Fig. 1; Fig. 10 to Fig. 18 are flowcharts for explaining the data search/transfer method in Fig. 1; Fig. 19 is a drawing showing an example of an application of the data search/transfer method in Fig. 1; Fig. 20 is a drawing showing the second page of Fig. 19; Fig. 21 is a drawing showing a different form of the display in Fig. 2; Fig. 22 is a drawing showing a different form of the display in Fig. 2; Fig. 23 to Fig. 26 are drawings for explaining the data search/transfer apparatus for the data search/transfer method in Fig. 1; Fig. 27 and Fig. 28 are drawings for explaining the data search/transfer method in Fig. 1; Fig. 29 and Fig. 30 are drawings for explaining a data search/transfer method using touch operation; and Fig. 31 and Fig. 32 are drawings showing a different form of the display in Fig. 21.

As shown in Fig. 1, when the data search/transfer method of this invention accesses a specific homepage on the Internet for example, contents (images), which include button or key images that correspond to the key arrangement of a ten-key 11 on a keyboard 10, and level images that are called up by selecting a button or key, are displayed on a data apparatus, for example the screen 2 of a personal computer 1. Also, it is possible to jump from those contents (images) to another homepage or link page as will be described later.

These button or key images are images that correspond to the ten-key 11 on a keyboard 10, and by the operator 3 operating the ten-key 11 on the keyboard 10, for example, it is possible to search or transfer data, as will be described later.

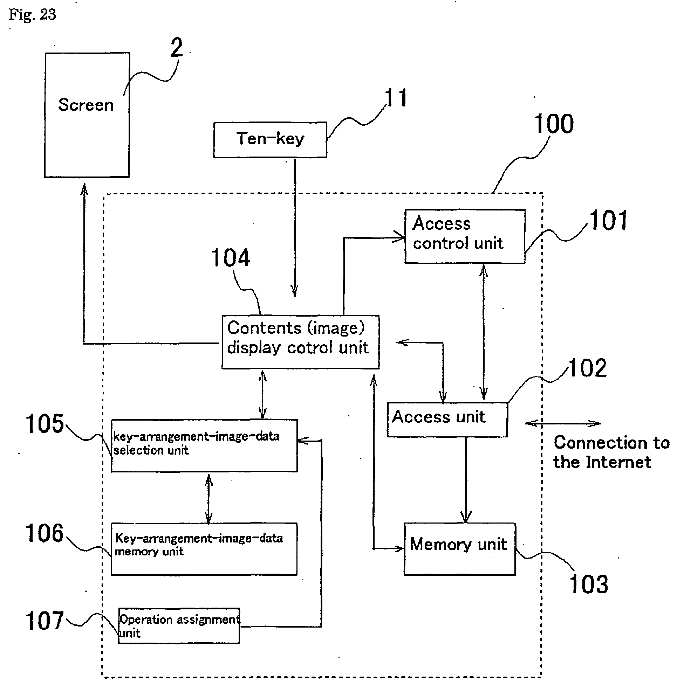

In order to perform the data search/transfer mentioned above, there is a data search/transfer apparatus 100 as shown in Fig. 23 in the personal computer 1. The data search/transfer apparatus 100 comprises: an access-control unit 101, access unit 102, memory unit 103, contents (image) display control unit 104, key-arrangement-image-data selection unit 105, key-arrangement-image-data memory unit 106 and operation assignment unit 107.

The access-control unit 101 controls access of a homepage on the Internet and calling up contents (images), which include the aforementioned button or key images and level images that are displayed on the screen 2.

The access unit 102 accesses a homepage on the Internet by control from the access-control unit 101, and calls up contents (images), which include button or key images and level images. The memory unit 103 stores the contents (images) that were called up by the access unit 102.

The contents (image) display control unit 104 controls the display on the screen 2 based on the contents (images) that are stored in the memory unit 103. The key-arrangement-image-data-selection unit 105 selects arbitrary data from the various shape data for the button or key images, which correspond to the arrangement of the ten-key 11 that is displayed on the screen 2, and which are stored in the key-arrangement-image-data memory unit 106. The key-arrangement-image-data memory unit 106 stores various shape data for the button or key images that correspond to the arrangement of the ten-key 11 that is displayed on the screen 2. The operation assignment unit 107 contains various data for assigning functions, which will be described later, to each button or key image of the contents (images) that are displayed on the screen 2.

The contents (images), which include button or key images that correspond to the key arrangement of the ten-key 11 displayed on the screen 2 of a personal computer 1, are as shown in Fig. 2, for example. Those contents (images) 20 are; 'Num Lock' button or key 21, '/' button or key 22, '*' button or key 23, '-' or key 24, buttons '1' to '9' or key 25, '+' button or key 26, '0' button or key 27, '.' button or key 28, and 'Enter' button or key 29.

In other words, the contents (images) 20 are on the initial screen (top page), and for example, 'System Guide' is displayed for the '*' button or key 23. 'Top Page' is displayed, for example, for the '-' button or key 24. 'Size Change - Standard, Enlarge' is displayed, for example, for the '+' button or key 26. 'Next Page' is displayed, for example, for the 0' button or key 27. 'Previous Page' is displayed, for example, for the '.' button or key 28.

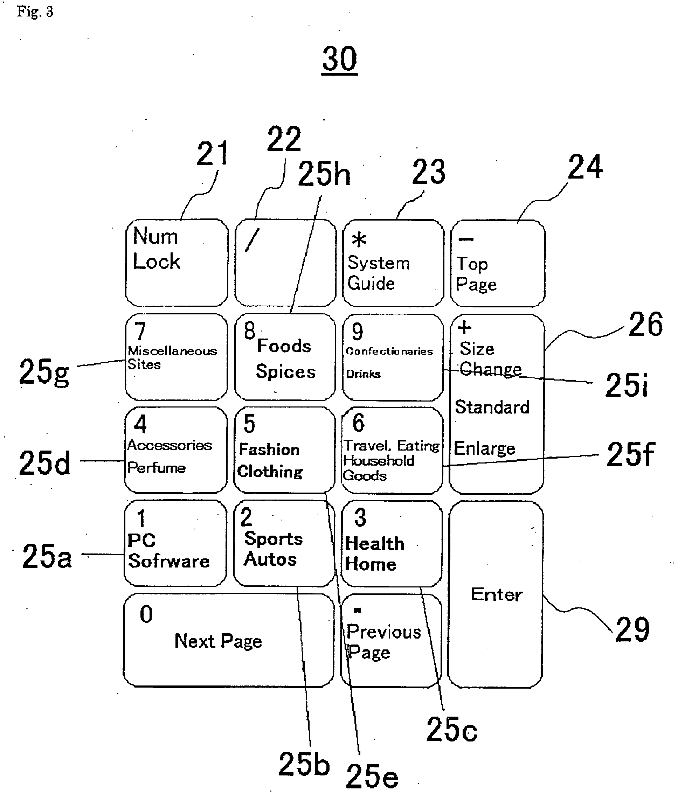

Here, these displayed contents are assigned arbitrarily by the aforementioned operation-assignment unit 107. Also, by operating the '-' button or key 24, the contents (images) 30 as shown in Fig. 3 for example are displayed on the screen 2 of the personal computer 1.

In other words, those contents (images) 30, are the second page that corresponds to the ' Top Page' of the '-' button or key 24. Here, 'PC Software' is displayed for button '1' or key 25a. 'Sports, Autos' is displayed for button '2' or key 25b. 'Health, Home' is displayed for button '3' or key 25c. 'Accessories, Perfume' is displayed for button '4' or key 25d. 'Fashion, Clothing' is displayed for button '5' or key 25e. 'Travel, Eating, Household Goods' is displayed for button 6 or key 25f. 'Miscellaneous Sites' is displayed for button '7' or key 25g. 'Food, Spices' is displayed for button '8' or key 25h. 'Confectionaries, Drinks' is displayed for button '9' or key 25i.

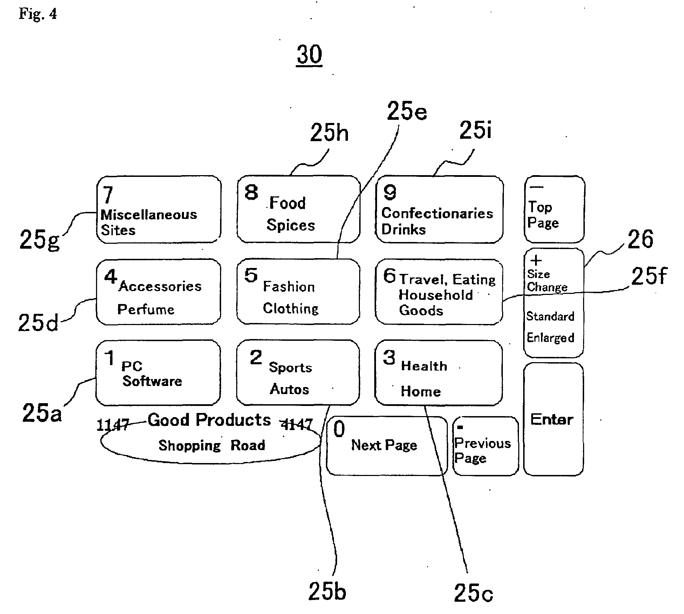

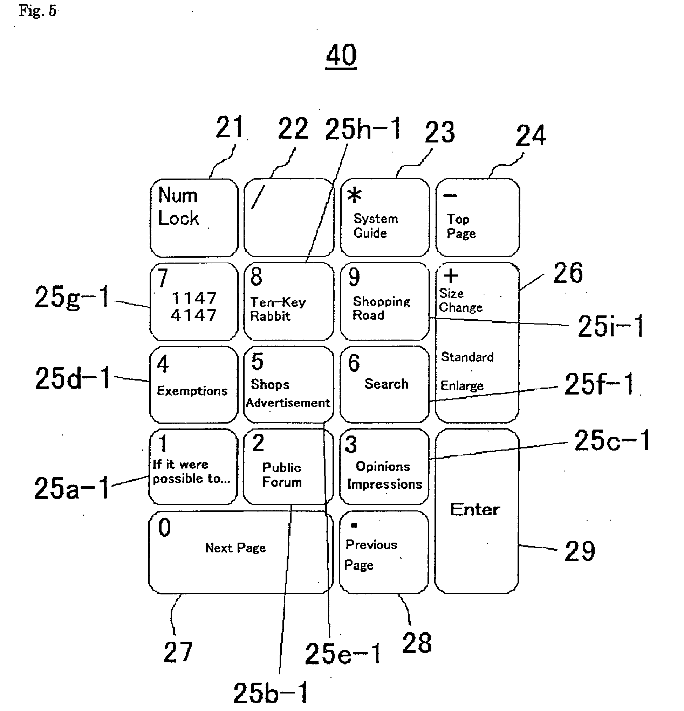

Here, for example, when the '+' button or key 26 is operated, the display is enlarged as shown in Fig. 4. Also, in the contents (images), 30 in Fig. 3, when the '*' button or key 23 'System Guide' is operated, for example, the level image or contents (images) 40 shown in Fig. 5 are displayed.

Here, 'If it were possible to...' is displayed for button '1' or key 25a-1. 'Public Forum' is displayed for button '2' or key 25b-1. 'Opinions, Impressions' is displayed for button '3' or key 25c-1. 'Exemptions' is displayed for button '4' or key 25d-1. 'Shops, Advertisement' is displayed for button '5' or key 25e-1. 'Search' is displayed for button '6' or key 25f-1. '1147, 4147' is displayed for button '7' or key 25g-1. 'Ten-key Rabbit' is displayed for button '8' or key 25h-1. 'Shopping Road' is displayed for button '9' or key 25i-1.

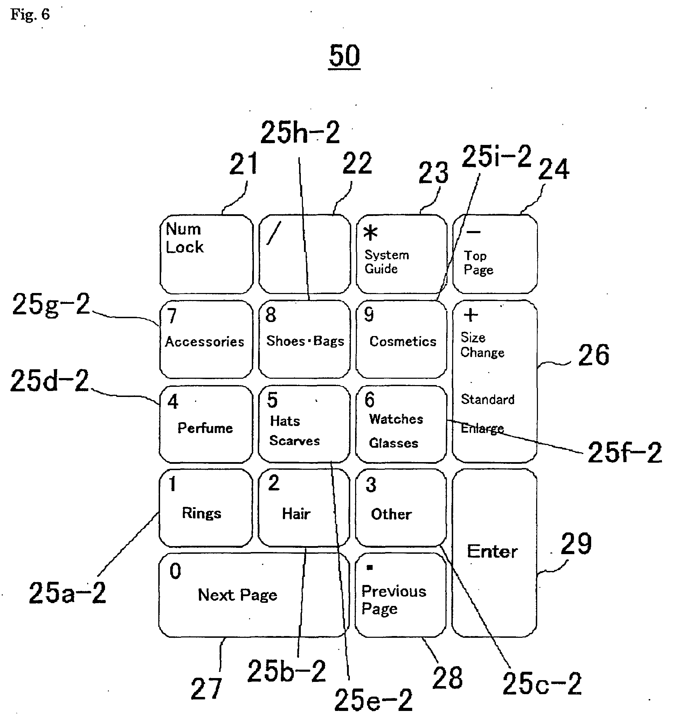

Moreover, for the contents (images) 30 in Fig. 3, when button '4' or key 25d, 'Accessories, Perfume', is operated, for example, the contents (images) 50 shown in Fig. 6 are displayed.

Here, 'Rings' is displayed for button '1' or key 25a-2. 'Hair' is displayed for button '2' or key 25b-2. 'Other' is displayed for button '3' or key 25c-2. 'Perfume' is displayed for button '4' or key 25d-2. 'Hats, Scarves' is displayed for button '5' or key 25e-2. 'Watches, Glasses' is displayed for button '6' or key 25f-2. 'Accessories' is displayed for button '7' or key 25g-2. 'Shoes, Bags' is displayed for button '8' or key 25h-2. 'Cosmetics' is displayed for button '9' or key 25i-2.

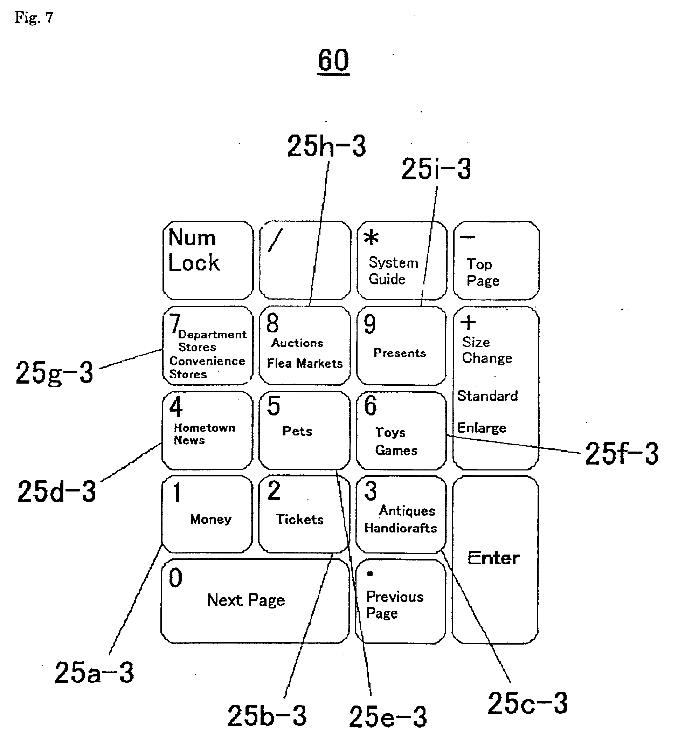

Also, for the contents (images) 30 in Fig. 3, when button '7' or key 25g, ' Miscellaneous Sites', is operated, for example, the contents (images) 60 shown in Fig. 7 are displayed.

Here, 'Money' is displayed for button '1' or key 25a-3. 'Tickets' is displayed for button '2' or key 25b-3. 'Antiques, Handicrafts' is displayed for button '3' or key 25c-3. 'Hometown News' is displayed for button '4' or key 25d-3. ' Pets' is displayed for button '5' or key 25e-3. 'Toys, Games' is displayed for button '6' or key 25f-3. 'Department Stores, Convenience Stores' is displayed for button '7' or key 25g-3. 'Auctions, Flea Markets' is displayed for button '8' or key 25h-3. 'Presents' is displayed for button '9' or key 25i-3.

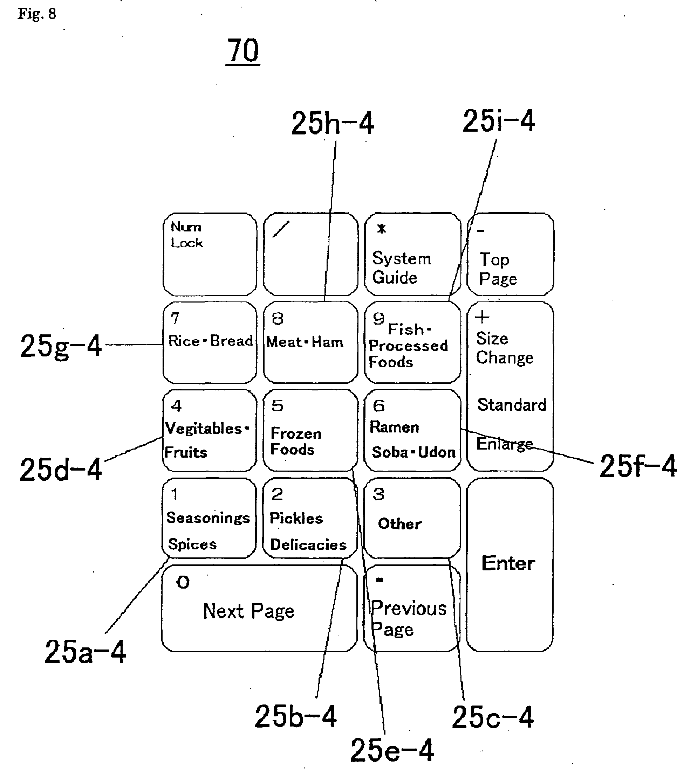

Also, for the contents (images) 30 in Fig. 3, when button '8' or key 25h, 'Food, Spices', is operated, for example, the contents (images) 70 shown in Fig. 8 are displayed.

Here, 'Seasonings, Spices' is displayed for button '1' or key 25a-4. 'Pickles, Delicacies' is displayed for button '2' or key 25b-4. 'Other' is displayed for button '3' or key 25c-4. 'Vegetables, Fruits' is displayed for button '4' or key 25d-4. 'Frozen Foods' is displayed for button '5' or key 25e-4. 'Ramen, Soba, Udon' is displayed for button '6' or key 25f-4. 'Rice, Bread' is displayed for button '7' or key 25g-4. 'Meat, Ham' is displayed for button '8' or key 25h-4. 'Fish, Processed Foods' is displayed for button '9' or key 25i-4.

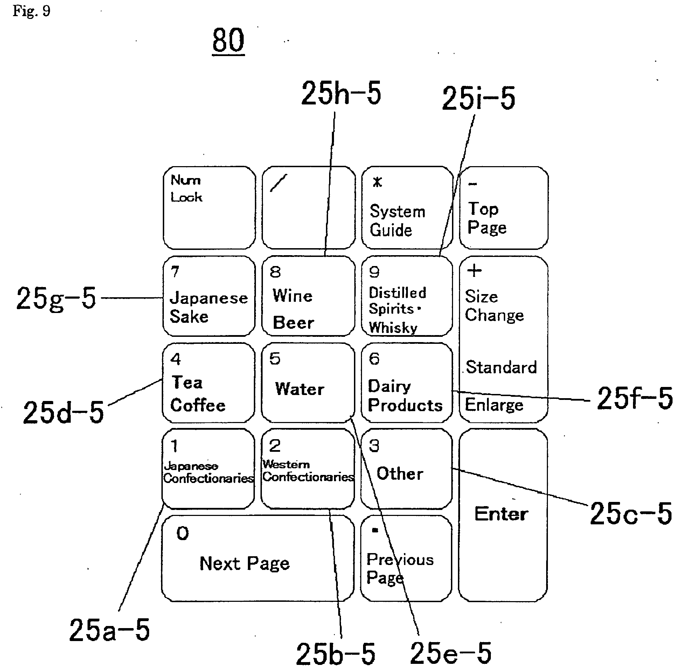

Also, for the contents (images) 30 in Fig. 3, when button '9' or key 25i, 'Confectionaries, Drinks', is operated, for example, the contents (images) 80 shown in Fig. 9 are displayed.

Here, 'Japanese Confectionaries' is displayed for button '1' or key 25a-5. 'Western Confectionaries' is displayed for button '2' or key 25b-5. 'Other' is displayed for button '3' or key 25c-5. 'Tea, Coffee' is displayed for button '4' or key 25d-5. 'Water' is displayed for button '5' or key 25e-5. 'Dairy Products' is displayed for button '6' or key 25f-5. 'Japanese Sake' is displayed for button '7' or key 25g-5. 'Wine, Beer' is displayed for button '8' or key 25h-5. 'Distilled Spirits, Whiskey' is displayed for button '9' or key 25i-5.

Next, a detailed example of an operation as mentioned above will be explained.

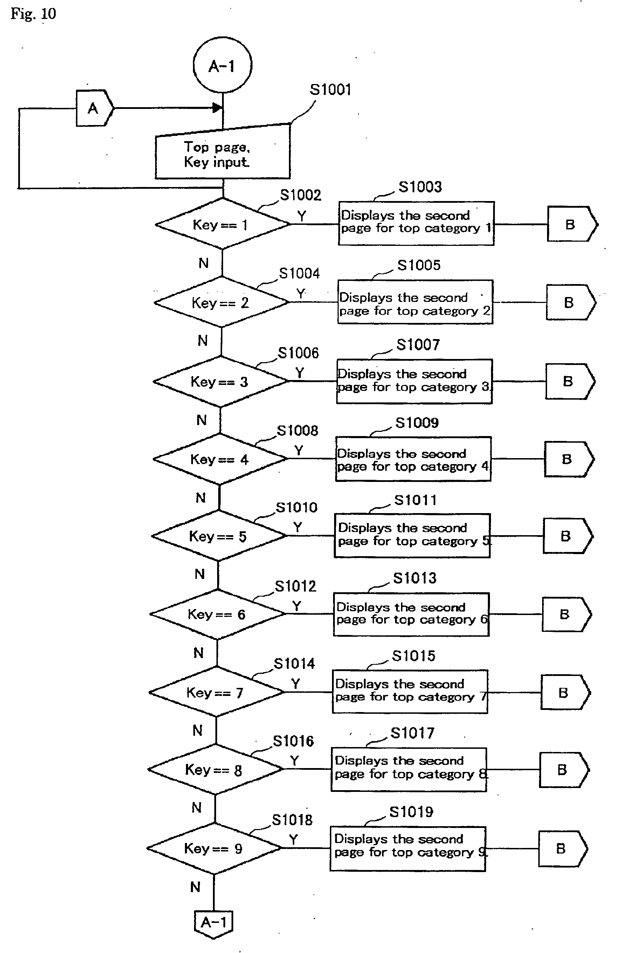

First, as shown in Fig. 10, the Top Page Key (button or key) is input for example (step 1001). Here, in Fig. 2 for example, this is done by operating the '-' button or key 24, and from this operation, the contents (images) 30 shown in Fig. 3 are displayed. Here, as described above, 'PC Software' is displayed for button '1' or key 25a, 'Sports, Autos' is displayed for button '2' or key 25b, 'Health, Home' is displayed for button '3' or key 25c, 'Accessories, Perfume' is displayed for button '4' or key 25d, 'Fashion, Clothing' is displayed for button '5' or key 25e, 'Travel, Eating, Household Goods' is displayed for button 6 or key 25f, ' Miscellaneous Sites' is displayed for button '7' or key 25g, 'Food, Spices' is displayed for button '8' or key 25h, and' Confectionaries, Drinks' is displayed for button '9' or key 25i.

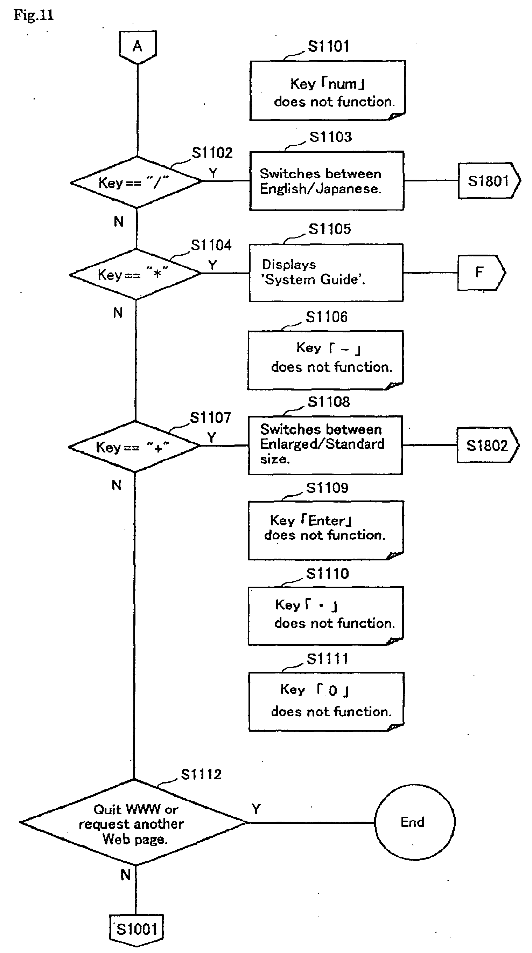

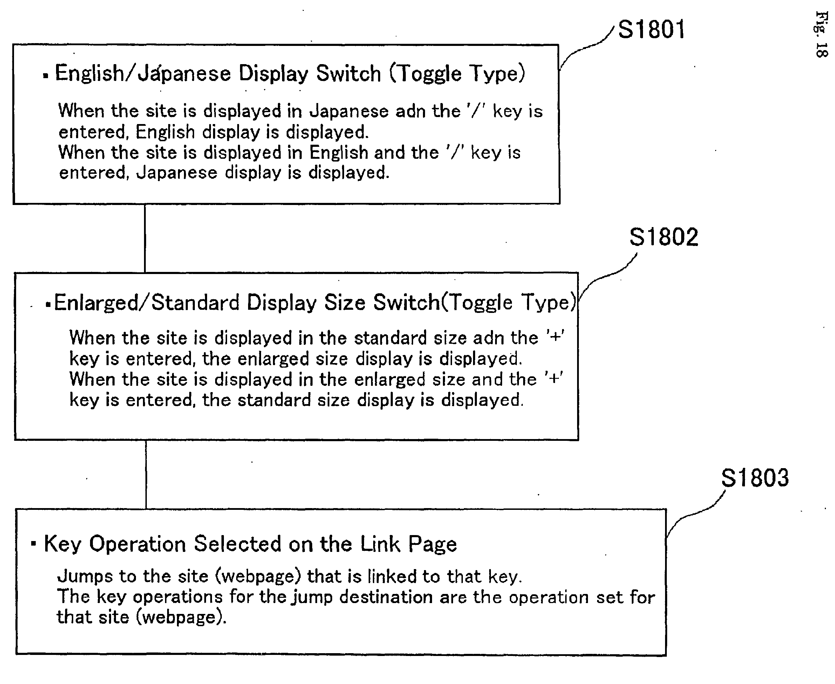

Here, first, as shown in Fig. 11, when the Key '/' is entered (step 1102), it is possible to switch (toggle switch) the display between the English version and Japanese version (step 1103, step 1801 in Fig. 18). In other words, when the '/' button or key 22 is entered when the site is displayed in Japanese, English is displayed. Also, when the '/' button or key 22 is entered when the site is displayed in English, Japanese is displayed. Moreover, switching the display is not limited to English/Japanese, but it is also possible to switch between all languages such as French, Chinese, German, etc.

In Fig. 2, functions are not given to the 'Num Lock' button or key 21, the '-' button or key 24, the 'Enter' button or key 29, the '.' button or key 28, or the '0' button or key 27 (steps 1101, 1106, 1109, 1110, 1111).

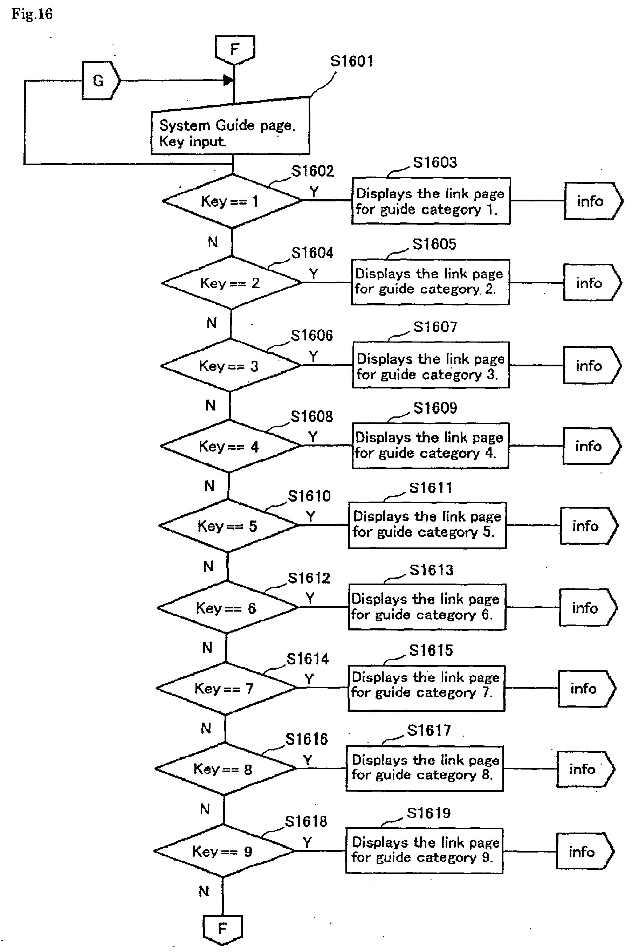

Also, when the '*' button or key 23 is operated (step 1104), the 'System Guide' is displayed (step 1105). This flow is shown in Fig. 16, and will be explained later.

Also, when the '+' button or key 26 is operated, it is possible, for example, to enlarge the standard screen shown in Fig. 3, as shown in Fig. 4 (step 1107, step 1802 in Fig. 18). In other words, when the '+' button or key 26 is operated when the site is displayed in the standard size, the enlarged size is displayed.

In addition, in step 1112, when WWW is quit or when there is a request to go to another Web page, the process ends, and when there is no request, the process moves to Fig. 10 (step 1001). Here, in the case of quitting WWW, for example, after the '-' button or key 24 in Fig. 2 has been pressed, it is possible to quit execution by pressing the 'Enter' button or key 29.
A request to move to another Web page will described later.

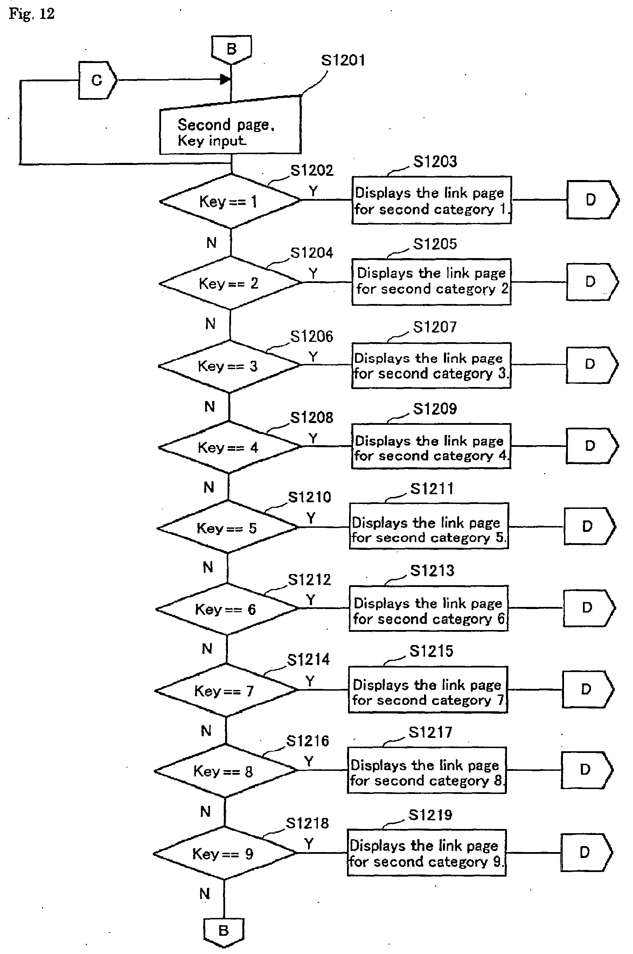

Here, when button '1' or key 25a is operated (step 1002), the second page for the top category 1, not shown in the figure, is displayed (step 1003). Then, the process moves to the flow shown in Fig. 12, however that explanation will be given later.

Also, when button '2' or key 25b is operated (step 1004), the second page of the top category 2, not shown in the figure, is displayed (step 1005). Then, the process moves to the flow shown in Fig. 12, and that explanation will also be given later.

Also, when button '3' or key 25c is operated (step 1006), the second page of the top category 3, not shown in the figure, is displayed (step 1007). Then, the process moves to the flow shown in Fig. 12, and that explanation will also be given later.

Also, when button '4' or key 25d is operated (step 1008), the second page of the top category 4, which is the contents (images) 50 shown in Fig. 6 for example, is displayed (step 1009). Then, the process moves to the flow shown in Fig. 12, and that explanation will also be given later.

Also, when button '5' or key 25e is operated (step 1010), the second page of the top category 5, not shown in the figure, is displayed (step 1011). Then, the process moves to the flow shown in Fig. 12, and that explanation will also be given later.

Also, when button '6' or key 25f is operated (step 1012), the second page of the top category 6, not shown in the figure, is displayed (step 1013). Then, the process moves to the flow shown in Fig. 12, and that explanation will also be given later.

Also, when button '7' or key 25g is operated (step 1014), the second page of the top category 7, which is the contents (images) 60 shown in Fig. 7 for example, is displayed (step 1015). Then, the process moves to the flow shown in Fig. 12, and that explanation will also be given later.

Also, when button '8' or key 25h is operated (step 1016), the second page of the top category 8, which is the contents (images) 70 shown in Fig. 8 for example, is displayed (step 1017). Then, the process moves to the flow shown in Fig. 12, and that explanation will also be given later.

Also, when button '9' or key 25i is operated (step 1018), the second page of the top category 9, which is the contents (images) 80 shown in Fig. 9 for example, is displayed (step 1019). Then, the process moves to the flow shown in Fig. 12, and that explanation will also be given later.

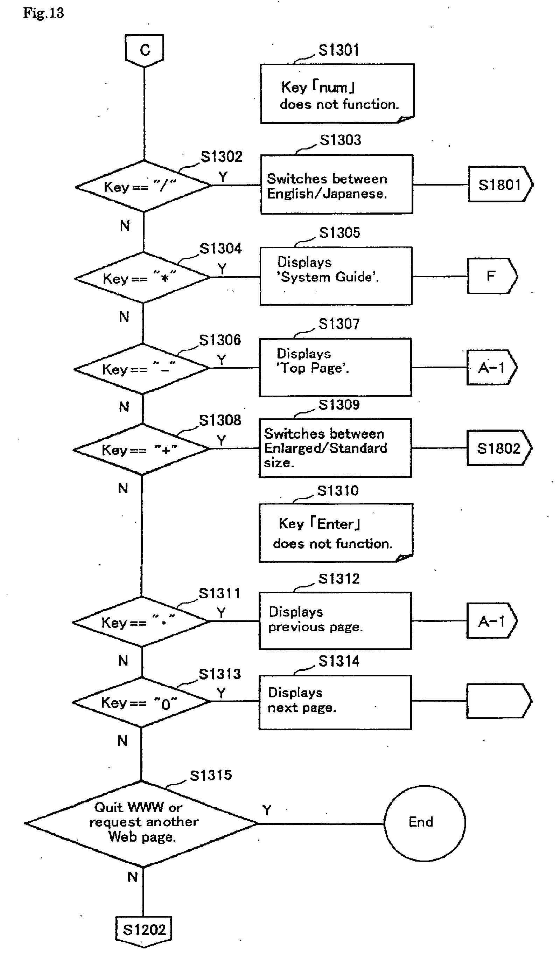

Next, in Fig. 12, the process waits for Key input for the second page (step 1201). Here, the contents (images) 50 shown in Fig. 6, for example, will be explained. First, in Fig. 13, when the '/' button or key 22 is entered (step 1302), it is possible to switch (toggle switch) the display between English and Japanese (step 1303, step 1801 in Fig. 18). In other words, when the '/' button or key 22 is entered when the site is displayed in Japanese, English is displayed. Also, when the '/' button or key 22 is entered when the site is displayed in English, Japanese is displayed.

In Fig. 6, functions are not given to the 'Num Lock' button or key 21, or the 'Enter' button or key 29 (steps 1301, 1310).

Also, when the '*' button or key 23 is operated (step 1304), the 'System Guide' is displayed (step 1305). This flow is shown in Fig. 16, and will be explained later.

Also, when the '-' button or key 24 is operated (step 1306), the process moves to the top page display (step 1307, A-1 in Fig. 10).

Also, when the '+' button or key 26 is operated (step 1308), it is possible, for example, to enlarge the standard screen shown in Fig. 6, as shown in Fig. 4 (step 1309, step 1802 in Fig. 18). In other words, when the '+' button or key 26 is operated when the site is displayed in the standard size, the enlarged size is displayed. Also, when the '+' button or key 26 is operated when the site is displayed in the enlarged size, the standard size is displayed.

Also, when the '.' button or key 28 is operated (step 1311), the display moves to the previous page or top page (step 1312, A-1 in Fig. 10). Also, when the '0' button or key 27 is operated (step 1313), the display moves to the next page (step 1314).

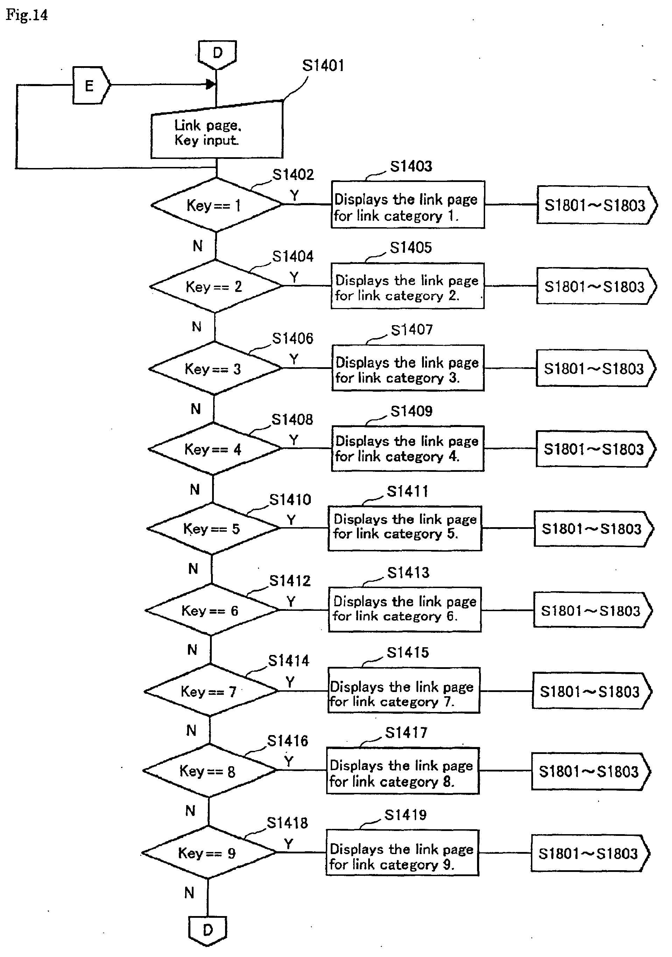

In addition, in step 1315, when WWW is quit or when there is a request to go to another Web page, the process ends, and when there is no request, the process moves to Fig. 12 (step 1202). In step 1202, when button '17 or key 25a-2 is operated, the link page for the second category 1, not shown in the figure, is displayed (step 1203). Then, the process moves to the flow in Fig. 14, and an explanation of that will be given later. Here, to quit WWW, as described above, in Fig. 2 for example, the '-' button or key 24 is pressed. A request to move to another Web page will be described later.

Also, when button '2' or key 25b-2 is operated (step 1204), the link page of the second category 2, not shown in the figure, is displayed (step 1205). Then the process moves to the flow in Fig. 14, and an explanation of that will also be given later.

Also, when button '3' or key 25c-2 is operated (step 1206), the link page of the second category 3, not shown in the figure, is displayed (step 1207). Then the process moves to the flow in Fig. 14, and an explanation of that will also be given later.

Also, when button '4' or key 25d-2 is operated (step 1208), the link page of the second category 4, not shown in the figure, is displayed (step 1209). Then the process moves to the flow in Fig. 14, and an explanation of that will also be given later.

Also, when button '5' or key 25e-2 is operated (step 1210), the link page of the second category 5, not shown in the figure, is displayed (step 1211). Then the process moves to the flow in Fig. 14, and an explanation of that will also be given later.

Also, when button '6' or key 25f-2 is operated (step 1212), the link page of the second category 6, not shown in the figure, is displayed (step 1213). Then the process moves to the flow in Fig. 14, and an explanation of that will also be given later.

Also, when button '7' or key 25g-2 is operated (step 1214), the link page of the second category 7, not shown in the figure, is displayed (step 1215). Then the process moves to the flow in Fig. 14, and an explanation of that will also be given later.

Also, when button '8' or key 25h-2 is operated (step 1216), the link page of the second category 8, not shown in the figure, is displayed (step 1217). Then the process moves to the flow in Fig. 14, and an explanation of that will also be given later.

Also, when button '9' or key 25i-2 is operated (step 1218), the link page of the second category 9, not shown in the figure, is displayed (step 1219). Then the process moves to the flow in Fig. 14, and an explanation of that will also be given later.

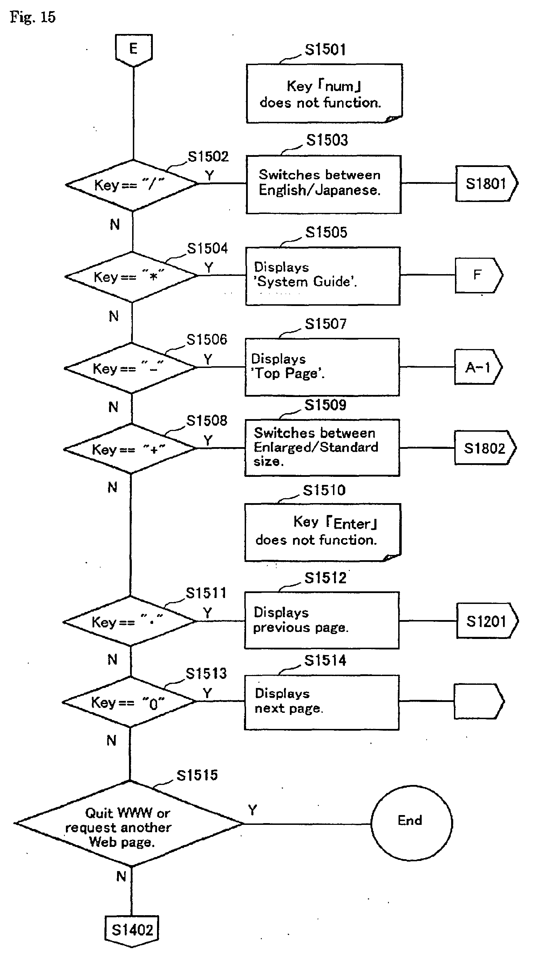

Next, in Fig. 14, the process waits for Key input on the link page (step 1401). Here, an explanation of the link page following the Key operation of the contents (images) 50 shown in Fig. 6, for example, will be given. First, in Fig. 15, when the '/' button or key 22 is entered (step 1502), it is possible to switch (toggle switch) between English and Japanese (step 1503, step 1801 in Fig. 18). In other words, when the '/' button or key 22 is entered when the site is displayed in Japanese, the site will be displayed in English. Also, when the '/' button or key 22 is entered when the site is displayed in English, the site will be displayed in Japanese.

In Fig. 6, no functions are given to the 'Num Lock' button or key 21, or the 'Enter' button or key 29 (steps 1501, 1510).

Also, when the '*' button or key 23 is operated (step 1504), the ' System Guide' is displayed (step 1505). This flow is shown in Fig. 16 and an explanation of it will be given later.

Moreover, when the '-' button or key 24 is operated (step 1506), the display moves to the top page (step 1507, step A-1 in Fig. 10). Also, when the '+' button or key 26 is operated (step 1508), it is possible, for example, to enlarge the standard screen shown in Fig. 6, as shown in Fig. 4 (step 1509, step 1802 in Fig. 18). In other words, when the '+' button or key 26 is operated when the site is displayed in the standard size, the site will be displayed in the enlarged size. Also, when the '+' button or key 26 is operated when the site is displayed in the enlarged size, the site will be displayed in the standard size.

Also, when the '.' button or key 28 is operated (step 1511), the display moves to the previous page or top page (step 1512, step 1201 in Fig. 12). Also, when the '0' button or key 27 is operated (step 1513), the display moves to the next page (step 1514).

In addition, in step 1515, when WWW is quit or when there is a request to go to another Web page, the process ends, and when there is no request, the process moves to Fig. 14 (step 1402).

In step 1402, when the part that corresponds to button '1' or key 25a-2 is operated, the process moves to the link site of category 1, not shown in the figure (step 1403). Here, the operation of step 1801 to step 1803 in Fig. 18 is also possible.

Also, when the part that corresponds to button '2' or key 25b-2 is operated (step 1404), the process moves to the link site of category 2, not shown in the figure (step 1405). Here, the operation of step 1801 to step 1803 in Fig. 18 is also possible.

Also, when the part that corresponds to button ' 3' or key 25c-2 is operated (step 1406), the process moves to the link site of category 3, not shown in the figure (step 1407). Here, the operation of step 1801 to step 1803 in Fig. 18 is also possible.

Also, when the part that corresponds to button ' '4' or key 25d-2 is operated (step 1408), the process moves to the link site of category 4, not shown in the figure (step 1409). Here, the operation of step 1801 to step 1803 in Fig. 18 is also possible.

Also, when the part that corresponds to button '5' or key 25e-2 is operated (step 1410), the process moves to the link site of category 5, not shown in the figure (step 1411). Here, the operation of step 1801 to step 1803 in Fig. 18 is also possible.

Also, when the part that corresponds to button '6' or key 25f-2 is operated (step 1412), the process moves to the link site of category 6, not shown in the figure (step 1413). Here, the operation of step 1801 to step 1803 in Fig. 18 is also possible.

Also, when the part that corresponds to button '7' or key 25g-2 is operated (step 1414), the process moves to the link site of category 7, not shown in the figure (step 1415). Here, the operation of step 1801 to step 1803 in Fig. 18 is also possible.

Also, when the part that corresponds to button '8' or key 25h-2 is operated (step 1416), the process moves to the link site of category 8, not shown in the figure (step 1417). Here, the operation of step 1801 to step 1803 in Fig. 18 is also possible.

Also, when the part that corresponds to button '9' or key 25i-2 is operated (step 1418), the process moves to the link site of category 9, not shown in the figure (step 1419). Here, the operation of step 1801 to step 1803 in Fig. 18 is also possible.

Next, the system guide page in Fig. 16 will be explained.

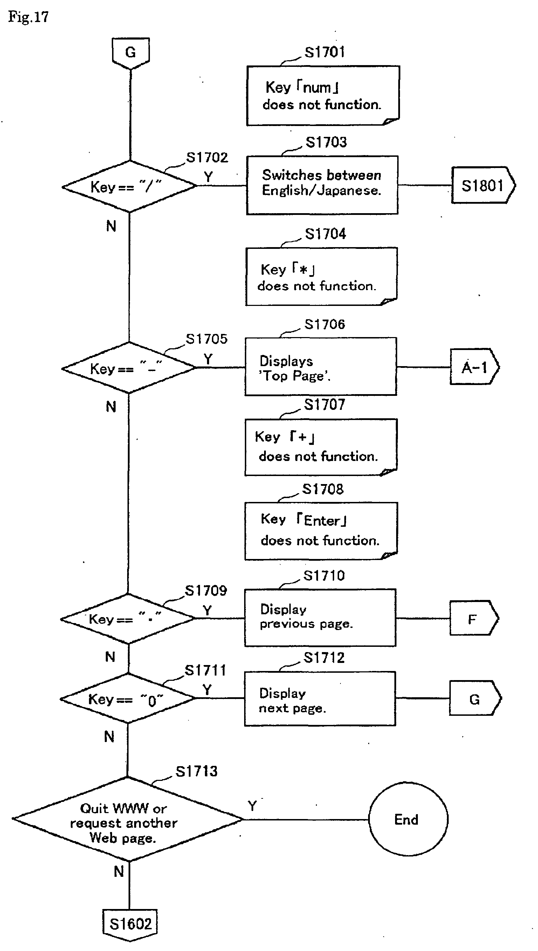

Here, the process first waits for Key input on the system guide page (step 1601). This system guide page corresponds to the contents (images) 40 shown in Fig. 5. First, in Fig. 17, when the '/' button or key 22 is entered (step 1702), it is possible to switch (toggle switch) between English and Japanese (step 1703, step 1801 in Fig. 18). In other words, when the '/' button or key 22 is entered when the site is displayed in Japanese, the site will be displayed in English. Also, when the '/' button or key 22 is entered when the site is displayed in English, the site will be displayed in Japanese.

In Fig. 6, the 'Num Lock' button or key 21, the '*' button or key 23, the '+' button or key 26 and the 'Enter' button or key 29 are not given any function (steps 1701, 1704, 1707, 1708).

Also, when the '-' button or key 24 is operated (step 1705), the display moves to the top page display (step 1706, step A-1 in Fig. 10). Also, when the '.' button or key 28 is operated (step 1709), the display moves to the previous top page display (step 1710, or F in Fig. 16).

Also, when button '0' or key 27 is operated (step 1711), the display moves to the next page display (step 1712, or G in Fig. 16). In addition, in step 1713, when WWW is quit or there is a request to go to another Web page, the process stops, and when there is no request the process moves to Fig. 16 (step 1602).

In step 1602, when button '1' or key 25a-1 is operated, the page for guidance category 1, not displayed in the figure, is displayed (step 1603, info).

Also, when button '2' or key 25b-1 is operated (step 1604), the page for guidance category 2, not displayed in the figure, is displayed (step 1605, info).

Also, when button '3' or key 25c-1 is operated (step 1606), the page for guidance category 3, not displayed in the figure, is displayed (step 1607, info). Also, when button '4' or key 25d-1 is operated (step 1608), the page for guidance category 4, not displayed in the figure, is displayed (step 1609, info).

Also, when button '5' or key 25e-1 is operated (step 1610), the page for guidance category 5, not displayed in the figure, is displayed (step 1611, info). Also, when button '6' or key 25f-1 is operated (step 1612), the page for guidance category 6, not displayed in the figure, is displayed (step 1613, info).

Also, when button '7' or key 25g-1 is operated (step 1614), the page for guidance category 7, not displayed in the figure, is displayed (step 1615, info). Also, when button '8' or key 25h-1 is operated (step 1616), the page for guidance category 8, not displayed in the figure, is displayed (step 1617, info).

Also, when button ' 9' or key 25i-1 is operated (step 1618), the page for guidance category 9, not displayed in the figure, is displayed (step 1619, info).

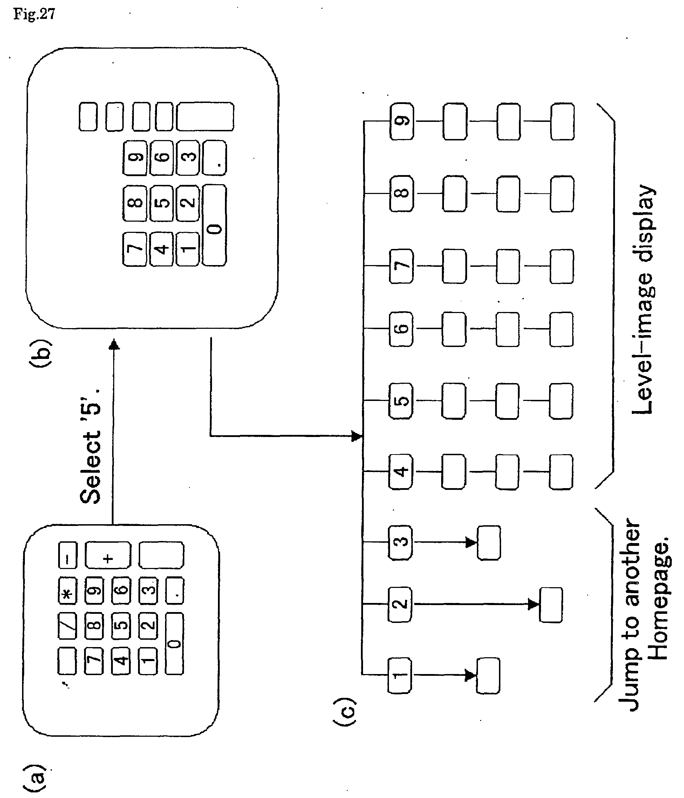

A simple summary up the operation described above is shown, for example, in Fig. 27. In other words, in the case of the contents (images) corresponding to Fig. 2 that are shown in Fig. 27(a), when the buttons or keys are operated or selected, for example when button or key '5' is operated or selected, the contents (images), which are level images, are displayed as shown in Fig. 27(b). In Fig. 27(b), level images for the same homepage are assigned to button or key '4' to button or key '9', so when one of the buttons or keys '4' to '9' is operated or selected, the level images are displayed as shown in Fig. 27(c).

Also, in Fig. 27(b), when a jump function to another homepage is assigned to button or key '1' to button or key '3', for example, a jump to another homepage is performed as shown in Fig. 27(c) by operating or selecting one of the buttons or keys '1' to' 3'.

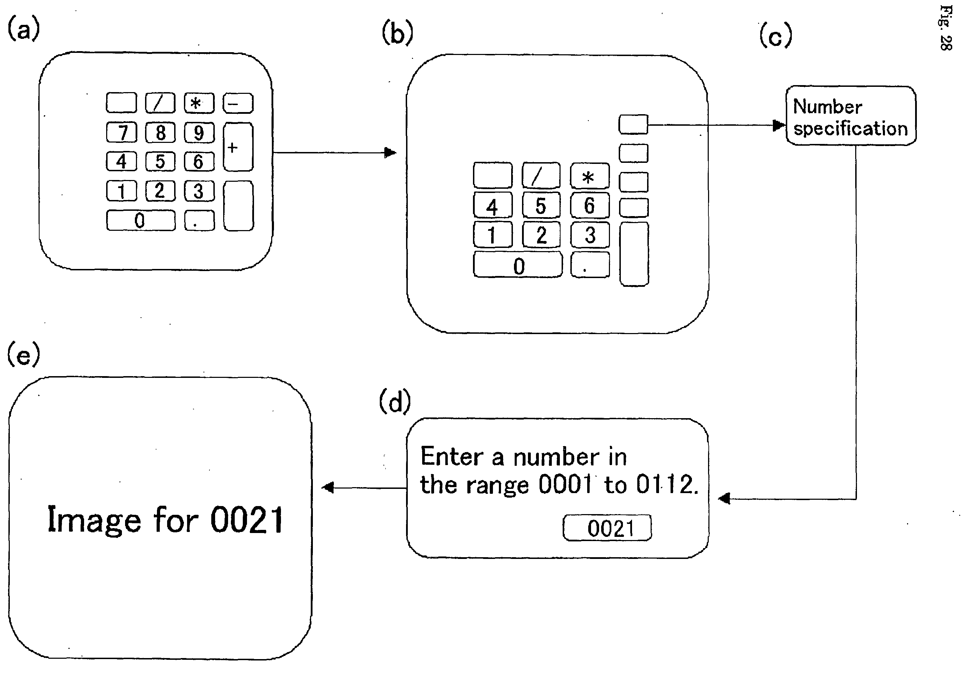

In the case when there is a large number of level-image displays corresponding to the buttons or keys '4' to '9' in Fig. 27(c), it is possible to specify the page of the level image as shown in Fig. 28, for example. In other words, for the contents (images) corresponding to Fig. 2 shown in Fig. 28(a), when one of the buttons or keys '1' to '9' are operated or selected, the level images corresponding to the operated or selected button or key '1' to '9' are displayed as shown in Fig. 28(b).

In Fig. 28(b), when a button or key assigned with a number specification is operated or selected (Fig. 28(c) is an enlarged view of the buttons or keys in Fig. 28(b) assigned with a number specification), as shown in Fig. 28(d), contents asking for input, 'Enter a number in the range 0001 to 0112', are displayed. When '0021' is entered, for example, the image corresponding to page '0021' is displayed as shown in Fig. 28(e).

Here, the case of entering a number in the range 0001 to 0112 as a number specification was explained, however, the invention is not limited to this, for example, it is possible to specify the number 123 by '*123Enter', or for telephone specifications, it is possible to specify the number 123 by '*123#'. Here, by specifying the number 123 by '*123Enter' or '*123#', it is possible to give the number a function such as a direct specification function using a product number, a specification function using a telephone number, or a specification function for the latitude and longitude of a zip code number.

In this way, in this embodiment, button or key images that correspond to a ten-key arrangement 11 are displayed on the screen 2 of a personal computer 1, and when a button or key image is selected, the level image that corresponds to the selected button or key image is displayed, so the operator 3 can search for or transfer data by operating the ten-key 11 on a keyboard 10, for example.

Therefore, it is possible for a new PC user, middle-aged or old-aged person, handicapped person, person not adept with clicking a mouse or person not able to click a mouse to search for a desired homepage by one-touch operation using a single finger. This will make it possible to expect even more demand for personal computers. Also, since there is no need to operate a mouse, it is also effective in the case of outdoor operation using a notebook PC or the like.

In this embodiment, the case of displaying button or key images for the contents (images) 30 shown in Fig. 3, for example, that correspond with a ten-key 11 shape was explained, however, the shape is not limited to the shape of a ten-key 11, and as long as the display is such that each of the buttons or keys of the ten-key 11 is understood, it is possible to change the shape. In other words, since various shape data for the ten-key 11 displayed on the screen 2 are stored in the key-arrangement-image-data memory unit 106 of the data search/transfer apparatus 100 shown in Fig. 23, it is possible to change the setting for the ten-key shape by selecting the stored data.

Also, in the case of customizing depending on the purpose of use, it is possible to freely change the operation assignment for button '1' or key 25a, button '2' or key 25b, button '3' or key 25c, button '4' or key 25d, button 5' or key 25e, button '6' or key 25f, button '7' or key 25g, button 8' or key 25h, and button '9' or key 25i. In other words, by selecting data contained in the operation-assignment unit 107 of the data search/transfer apparatus 100 shown in Fig. 23, it is possible to easily change the operation assignments.

In detail, the operations of the buttons or keys '/', '*'. '-', '+', 'Enter', '.', including '0' to '9' can be freely set depending on the screen and cursor position. For example, on the first screen (top page), '/' can be used to switch the screen for inputting items necessary for an order, and the order screen (second page) can be an instruction screen for automatically entering the name of the person making the order according to item.

Also, in the case where a service menu is assigned for '/', it is possible to assign a function such as search, print or number input (function not displayed with '*'). Also, when special number input is assigned for the site, it is possible to assign a function such as page, image, product, Internet address, FAX or telephone number for '*'.

Also, when '-' is assigned to the top page, it is possible to assign a function such as 'Go to top category', 'Return to start', or 'End'. Also, when display switching is assigned for '+', it is possible to assign a function such as enlarge, standard, auto new page ON/OFF, etc. Also, it is possible to assign 'Set' for 'Enter'. Also, when going to the previous page is assigned for '.', it is possible to assign it such that when data are displayed the display returns to the data-display category. Also, it is possible to assign going to the next page for '0'. A function such as number, category, genre, action, or search word can be assigned to '1' to '9'.

Also, in addition to functions for instructing or specifying the character and operation of the level, it is possible to set specifications or instructions for all kinds of operations.

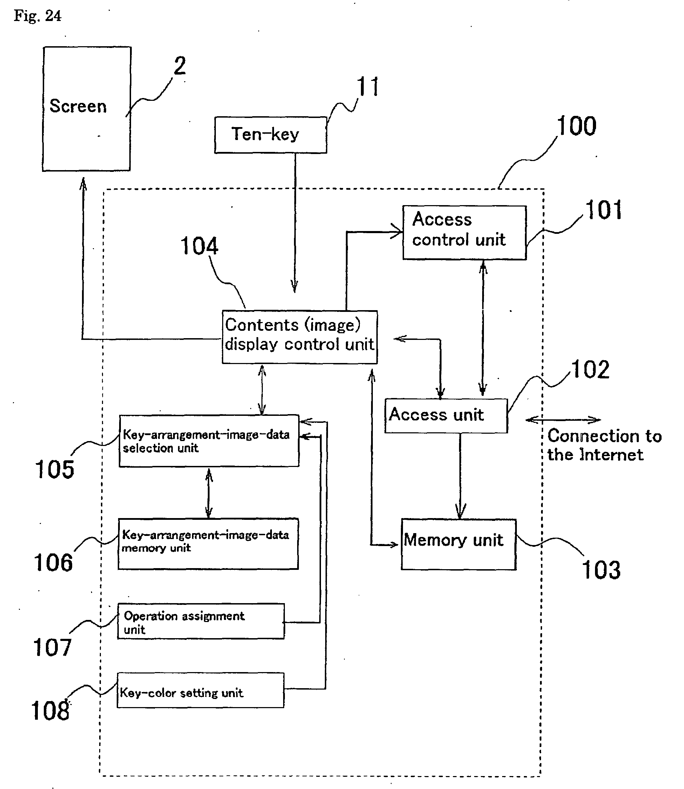

Also, it is possible to change the colors displayed for button '1' or key 25a, button '2' or key 25b, button '3' or key 25c, button '4' or key 25d, button '5' or key 25e, button '6' or key 25f, button '7' or key 25g, button '8' or key 25h, and button '9' or key 25i of the contents (images) 30. In this case, for example as shown in Fig. 24, a key-color-setting unit 108 is added to the data search/transfer apparatus 100, and the key-color data contained in the key-color-setting unit 108 are selected. By displaying each button or key image in a different color in this way, it is possible to easily identify each button or key.

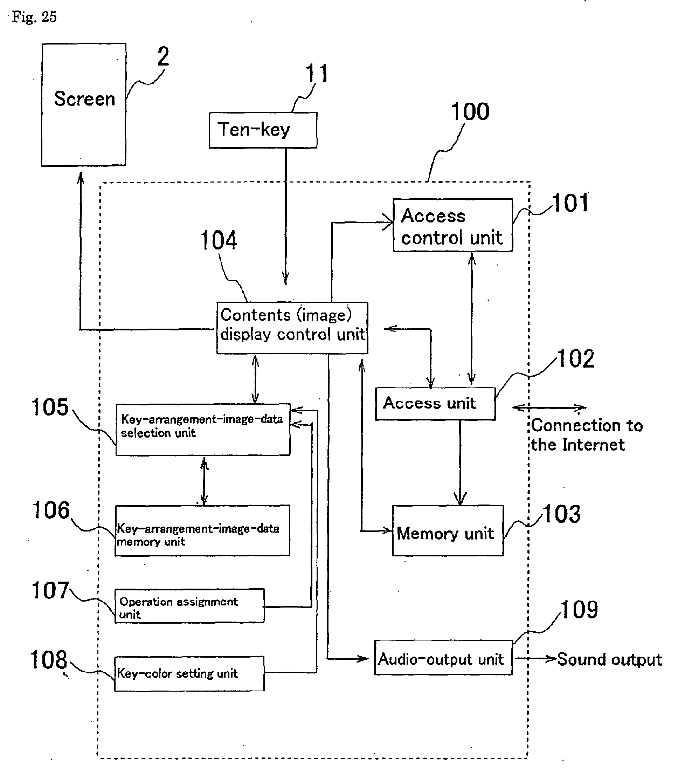

Also, it is possible to notify by sound of the minimum required data on a screen when each screen is displayed. In this case, as shown in Fig. 25 for example, an audio-output unit 109 is added to the data search/transfer apparatus 100, and it is possible to generate sounds from the audio-output unit 109 that correspond to the keys, which are arranged for example in the ten-key arrangement, in the step when they are pressed. In this state, there is a wait for the next key. When 'Enter' is pressed or the same key as a key that has already been pressed is pressed again, it is possible to have it operate as a 'Set' instruction. When a key other than these is pressed, the paused state is released, and the sound for that key operates.

It is possible to check the input characters or numbers by reading or entering the same characters and checking whether or not they match. For example, the amount of a deposit can be checked by entering the amount two times.

Also, in this embodiment, as shown in Fig. 3 for example, the case of displaying 'PC Software' for button 1' or key 25a, 'Sports, Autos' for button '2' or key 25b, 'Health, Home' for button '3' or key 25c, 'Accessories, Perfume' for button '4' or key 25d, 'Fashion, Clothing' for button '5' or key 25e, 'Travel, Eating, Household Goods' for button '6' or key 25f, ' Miscellaneous Sites' for button '7' or key 25g, . 'Food, Spices' for button '8' or key 25h and 'Confectionaries, Drinks' for button '9' or key 25i was explained, however, it is possible to suitably change any of these contents.

Also, the number of level pages given to each button or key is not limited and can be any number.

Also, for this embodiment, searching a homepage was explained, however, by operating the keys of the ten-key described above, the embodiment can also be applied to transferring intentions (bi-directional communication). In other words, by specifying any category, it is possible to save the user' s intention or messages for each level, and by making it possible to select an intention transfer function, such as 1 = Yes, 2 = No, the intention can be transferred (bi-directional communication).

In other words, for the top page shown in Fig. 19 for example, 'Nursing Home Taxi' is displayed for button '1' or key 25a, 'Home Delivery Shops and Guide' for button '2' or key 25b, 'Center Guide' for button '3' or key 25c, 'I want to know...' for button '4' or key 25d, 'Gossip Circles' for button '5' or key 25e, 'Transport Assistance' for button '6' or key 25f, 'Urgent' for button '7' or key 25g, 'Health Information, Receive' for button '8' or key 25h and 'Schedule Changes' for button '9' or key 25i.

Moreover, by operating button '8' or key 25h, 'Health Information, Receive', on the second page as shown in Fig. 20 for example, 'Good Condition' is displayed for button '1' or key 25a-1, 'Headache, Fever' for button '2' or key 25b-1, 'Dizziness, Ringing in the Ears' for button '3' or key 25c-1, 'Toothache' for button '4' or key 25d-1, 'Sore throat' for button ' 5' or key 25e-1, 'Chest Pain' for button '6' or key 25f-1, 'Backache' for button '7' or key 25g-1, 'Upset Stomach' for button '8' or key 25h-1 and 'Sore Arms, Legs, Body' for button '9' or key 25i.

Also, on this kind of second page, it is possible to transfer intentions by operating the respective buttons or keys.

Also, as explained for Fig. 3 for example, it is possible to give functions to button '1' or key 25a, button '2' or key 25b, button '3' or key 25c, button '4' or key 25d, button '5' or key 25e, button '6' or key 25f, button ' 7' or key 25g, button '8' or key 25h and button '9' or key 25i, such as a display selection instruction function, a character-number input instruction function, a number input function, a vicarious character input function, or a name and address input function performed by adding pre-registered data.

Also, it is possible to give functions to each of the buttons or keys for narrowing down a lot of data to only data corresponding to certain conditions or that are determined to be in a range of conditions, and a function as an inquiry system for collecting necessary data.

In short, this invention makes it possible to specify intentions, search, reply, and enter characters or numbers on a homepage for all kinds of data regardless of the type of industry or business. In other words, it is possible to apply the invention to home heath management and response systems, reservation status inquiry systems (including reservations), real-estate rent or sale data searches (including ordering materials), care service data searches (including advice), selling and providing merchandise, sending and receiving data, factory line management and government office homepages, for example. It is also possible to apply the invention to online banking, employment agencies such as 'Hello Work', distribution systems, office management, medical disposal process management, or schedule management. Furthermore, it is possible to combine and operate the invention with other applications.

Also, the Internet data search/transfer method using the ten-key 11 of a personal computer 1 of this embodiment is not limited to an interface function for browsing a homepage, but it is also possible to use it as an interface for operating a cable television or electronic devices (television, video, ticket vending machines, other household appliances, industrial equipment, medical equipment).

In other words, in using a real-estate search as an example, buttons or keys '1' to '9' are arranged in a first category such as; condominiums and apartments for rent, homes for rent, condominiums for sale, homes for sale, and land, and each advances to a respective level to select conditions such as area, cost or other to narrow down the candidates. The data are assigned to be displayed for the buttons or keys '1' to '9', and when further specified, the data are displayed in a button or key format or page format. Also, transfer of intentions regarding displayed data can be performed by a method of specifying the arranged categories.

It is also possible to apply the method to a function called 'i-mode' for mobile telephones. In other words, categories '1' to ' 9' are displayed on the data display screen. The arranged functions are specified by pressing the respective buttons or keys '1' to '9'. In this case, only the arrangement of numbers differs from the ten-key on a personal computer and the operation is the same.

In other words, it is possible for '*' to take the function 'Number input wait state', '#' to take the function ^{'}Go to the next screen', and after a number is entered that starts with '*' it is set and '0' can take the function 'Return to the previous screen'.

Also, as shown in Fig. 21 for example, it is possible to display a ten-key in a small window. Also, the shape of the ten-key is not limited to a matrix shape but can also be displayed in a horizontal row.

Also, the ten-key image can correspond to a keyboard as shown in Fig. 22(a), or can also correspond to the push buttons or keys on a mobile telephone as shown in Fig. 22(b).

Moreover, the ten-key image can be configured in two horizontal rows as shown in Fig. 31 (a) and Fig. 31(b), or can be configured in two vertical columns as shown in Fig. 31(c), or in one vertical column as shown in Fig. 31(d).

Also, as shown in Fig. 32, the ten-key can be displayed in a small window next to a fixed display area.

Furthermore, it is possible to process specified transition data. In other words, the data specified when changing levels can be stored, displayed or used as transition data to be used for another use. For example, in the case of the image in Fig. 3, the data '9' - '9' - '1' mean that the path taken was button '9' or key 25i, 'Confectionaries and Drinks', on the top page, button '9' or key , 'Japanese Sake', on the second page, and button or '1' key , 'Setchubai' on the link page.

In the case of a home diagnosis system this would be:
Top page: Button '9' or key , No appetite
Second page: Button '9' or key , Temperature: 37.0 - 37.9
Third page: Button '1' or key , Sore throat

Here, the path specified by the user is used as data, so it is possible to use it as code data that links answer data to a health consultation according to diagnosis results.

Also, when the invention is applied to 'i-mode' for a mobile telephone, the following is possible. For example, it is possible to use the invention for a lodging and accommodations information and reservation system.

In this case:
- Search for accommodations such as lodges, hotels, etc. by name or nearest train station.
- Narrow down the search method by selecting keys '1' to '9'.
- After the search, display text data or room layout (photo, images, etc.) by pressing the appropriate key.
- Display only the desired data by selecting a key '1' to '9' for the information desired. For example, there is a menu containing: cost, amusement, sightseeing guide, restaurant ranking, etc.
- By selecting keys '1' to '9', it is possible to select the method for displaying the information such as text, photos and images, sound, Japanese, English, Chinese, etc.
- In the case of a favorite room at a hotel always used, enter the lodge or hotel number (managed in the database) and room number.
- Display the reservation status.
- In the case the room is already reserved, display information on vacant rooms having similar room conditions.
- To reserve a vacant room, press the appropriate key to call the front desk directly.

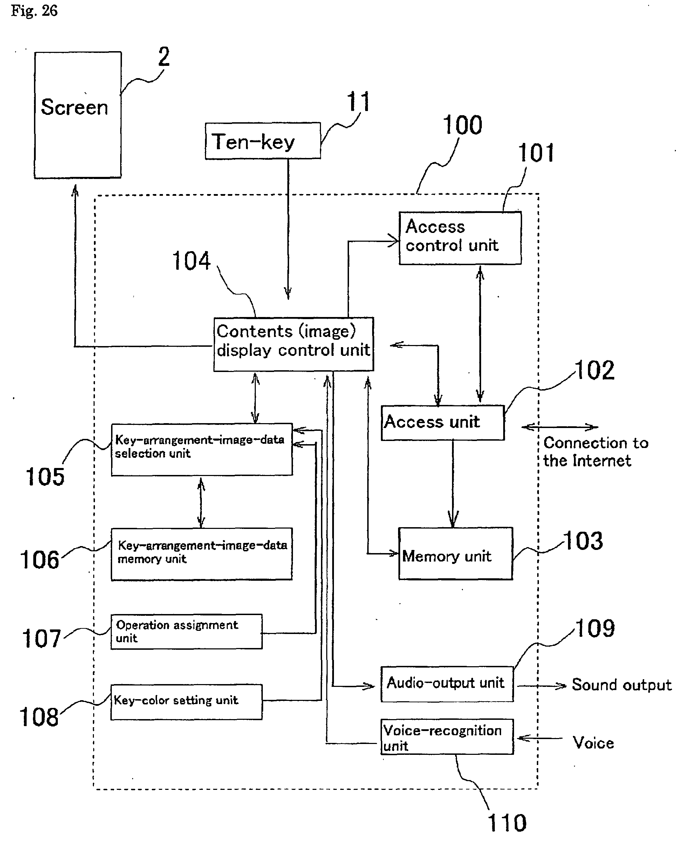

Also, as shown in Fig. 26 for example, by adding a voice-recognition unit 110 to the data search/transfer apparatus 100, it becomes possible to give voice display instructions for the contents (images) shown in Fig. 3 to Fig. 9. In this case, there is no need to operate the keyboard 10 of the personal computer 1, thus making it possible to improve operability. Also, this embodiment is not limited to operation of a keyboard 10 of a personal computer 1, and it is possible to perform mouse operations.

Also, in this embodiment, the case of using a personal computer 1 as the data apparatus was shown, however, the invention is not limited to this personal computer 1, and it is possible to apply the invention to other data apparatuses such as CATV, PHS, PDS, PDA, etc.

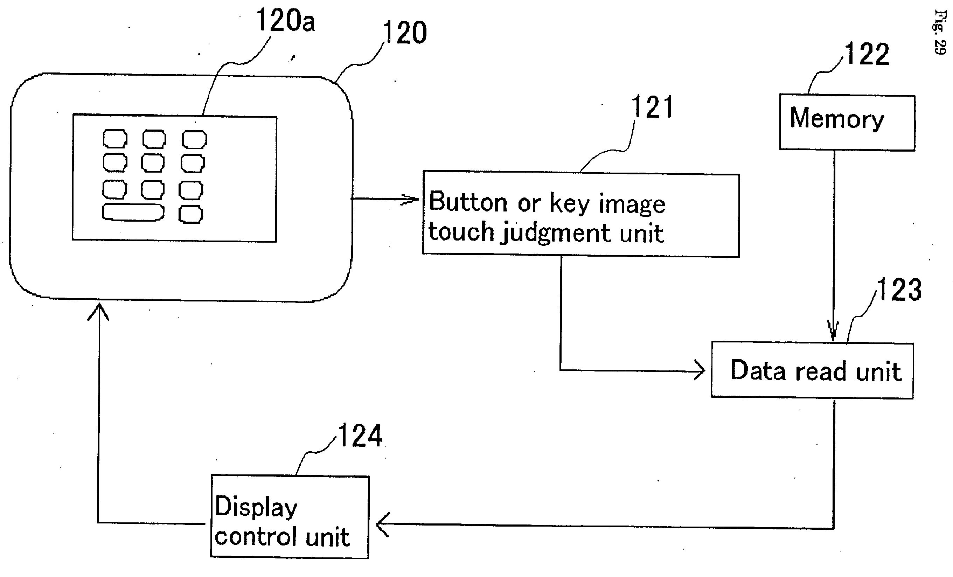

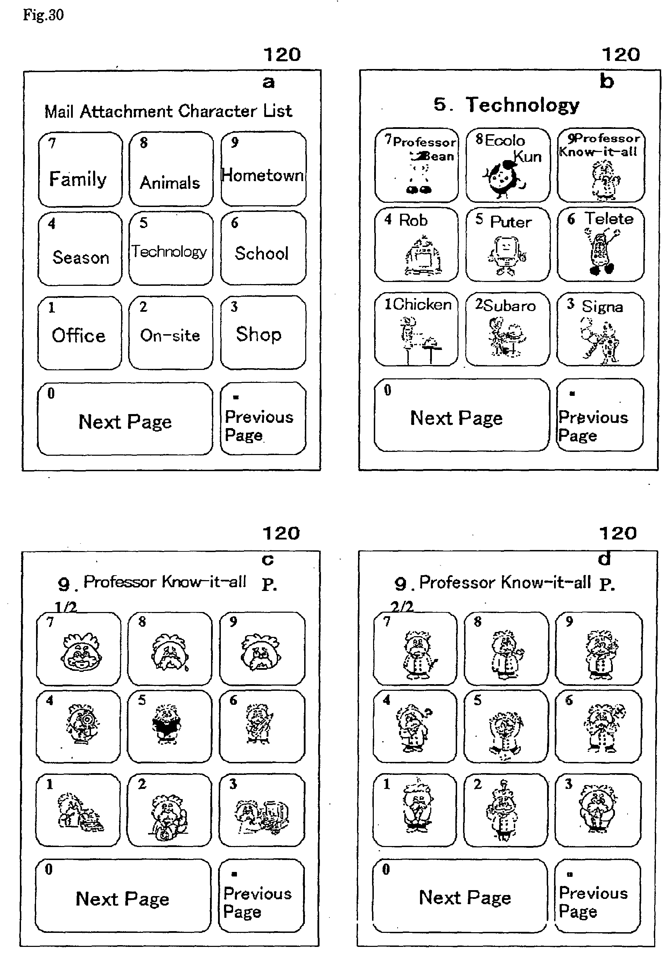

Also, in this embodiment, the case of displaying button or key images corresponding to a ten-key layout on the screen 2 of a personal computer 1 for example, and then displaying a level image corresponding to a button or key image that is selected using the ten-key 11 was explained, however, the invention is not limited to this example, and as shown in Fig. 29 and Fig. 30, it is possible to have an interface in which the button or key image itself changes by touching the screen, and data search/transfer is performed.

In other words, as shown in Fig. 29, by touching any button or key image 120a that is displayed on the screen 120, a button or key-image judgment unit 121 determines that the button or key image was touched. When the button or key-image judgment unit 121 determines that a button or key image has been touched, it has the data-read unit 123 read the corresponding data from memory 122. The read data are then displayed on the screen 120 by the display control unit 124.

Here, the change of a button or key image 120a that is displayed on the screen 120 will be explained using Fig. 30. First, when a button or key image 120a, for example 5 'Technology', is pressed, the data memory 122 for the button or key image 120b that corresponds to 5 'Technology' is called and the button or key image 120a changes to the button or key image 120b. Here, the contents for button or key images '1' to '9' are changed.

Also, by touching button or key image 120b, for example, 9 'Professor Know-it-all', is pressed, the data memory 122 for the button or key image 120c that corresponds to 9 'Professor Know-it-all' is called and the button or key image 120b changes to the button or key image 120c. Similarly, the contents for button or key images '1' to '9' are changed.

Also, by touching button or key image 120c, for example, 0 'Next Page', is pressed, the data memory 122 for the button or key image 120c that corresponds to 0 'Next Page' is called and the button or key image 120c changes to the button or key image 120d. Similarly, the contents for button or key images '1' to '9' are changed.

By having the button or key image 120a displayed on the screen 120 change when touched, the sense of operation is increased, and operability is increased. Also, the method of changing the contents of the button or key image itself by this kind of touch operation, is not only effective for PDS, PHS, PDA or the like that has small buttons or keys, but is also very effective as an interface function for operating a cable television or digital apparatus (television, video, ticket vending machine, other household appliances, industrial equipment, medical equipment).

Also, in this embodiment, the case of accessing a homepage on the Internet and displaying contents, including button or key images and level images, that correspond to a ten-key 11 arrangement on the screen 2 of a personal computer 1 was explained, however, the invention is not limited to this example, and it is possible to store data for these contents (images) on a medium such as an optical disc, and read and display the contents (images) from that medium by a data apparatus such as a personal computer 1, CATV, PHS, PDS, PDA, etc.

### Industrial Application

With the data search/transfer apparatus, data search/transfer method and recording medium recorded with a program indicating the procedure of the data search/transfer method, button or key images corresponding to a key layout on the screen of a data apparatus are displayed, and by selecting a button or key image, a level image that corresponds to the selected button or key image is displayed, so it is possible for a new PC user, middle-aged or old-aged person, handicapped person, person not adept with clicking a mouse or person not able to click a mouse to easily and certainly search or transfer data.

## Claims

1. A data search/transfer apparatus comprising: a memory unit that stores contents, (images), including button or key images and level images; a key-arrangement-image-data memory unit that stores various shape data for button or key images that correspond to the key arrangement displayed on the screen of a data apparatus; a key-arrangement-image-data selection unit that selects arbitrary data from the various shape data for button or key images that are stored in said key-arrangement-image-data memory unit when contents (images) stored in said memory unit are displayed on said screen; an operation-assignment unit that assigns a specific operation function to each individual button or key image that are selected when arbitrary data are selected by said key-arrangement-image-data selection unit; and a contents (image) display control unit that adds shape, which is based on the data selected by said key-arrangement-image-data selection unit, and operation function, which was assigned by said operation-assignment unit, and displays the contents (images) stored in said memory unit on said screen.

2. The data search/transfer apparatus of claim 1 wherein said memory unit stores said contents (images), including button or key images and level images, that are called up by accessing a homepage on the Internet by an access-control means.

3. The data search/transfer apparatus of claim 1 wherein said contents (image) display control unit color codes said button or key images based key color data contained in a key-color setting unit and selected by the key-arrangement-image-data selection unit.

4. The data search/transfer apparatus of claim 1 wherein sound, which corresponds to said selected data, is output by an audio-output unit when a button or key image, corresponding to the key arrangement displayed on the screen of said data apparatus by said contents (image) display control unit, is selected.

5. The data search/transfer apparatus of claim 1 or claim 4 wherein said contents (image) display control unit executes a specific operation corresponding to a said button or key image when a voice-recognition unit identifies that a said button or key image corresponding to the key arrangement displayed on the screen of said data apparatus has been selected.

6. A data search/transfer method comprising: a first process of accessing data containing contents (images), including button or key images and level images; a second process of displaying said button or key images that correspond to a key arrangement on the screen of a data apparatus according to said access; and a third process of displaying a level image that corresponds to a selected button or key image when said button or key image is selected.

7. The data search/transfer method of claim 6 wherein said first process includes a fourth process of accessing a Homepage on the Internet.

8. The data search/transfer method of claim 6 wherein said second process includes a fifth process in which said button or key images correspond to a ten-key or dial key arrangement.

9. The data search/transfer method of claim 6 wherein said third process includes a sixth process in which said level images are contents for transferring the operator's intentions.

10. The data search/transfer method of any one of the claims 6, 8 or 9 wherein said second, fifth and sixth processes include a seventh process of changing the color displayed for each of said keys.

11. The data search/transfer method of claim 6 or claim 8 wherein said second, fifth and sixth process include an eighth process of assigning an arbitrary operation for each said button or key image.

12. The data search/transfer method of claim 6 wherein said second and third processes include a ninth process of using sound to notify of the minimum required data on the screen every time said button or key images are selected or when said level images are displayed.

13. The data search/transfer method of claim 6 wherein said second process includes a tenth process of adding pre-registered data for said button or key images for performing a selection-instruction function for selecting what to display, a character/number input instruction function, number input function, vicarious character input function, and name and address input function.

14. The data search/transfer method of claim 6 wherein said second process includes an eleventh process of giving a function to said button or key images for narrowing down data from a large amount of data to only data that are determined to match conditions or be within a range of conditions, and a function as an inquiry system for collecting required data.

15. The data search/transfer method of claim 6 wherein said second process includes a twelfth process of displaying said button or key images in a small window.

16. The data search/transfer method of claim 6 wherein said second process includes a thirteenth process of displaying said button or key images in a matrix shape, a horizontal row or a vertical column.

17. The data search/transfer method of claim 6 wherein said third process includes a fourteenth process of keeping the selection of said button or key images as transition data.

18. The data search/transfer method of claim 16 wherein said fourteenth process includes a fifteenth process of using said transition data as code data linked to reply data.

19. A recording medium on which a program that is capable of executing any of the data search/transfer methods of claim 6 to claim 18 is recorded.

20. A data apparatus wherein any one of the data search/transfer apparatuses of claim 1 to claim 5 is installed.

21. An interface wherein a judgment means determines the button or key image when a button or key image displayed on the screen is selected, and has the data-call-up unit call up corresponding data from memory, and by way of a display control unit, displays the called up data on said screen such that the contents of the button or key images are changed.

22. The interface of claim 21 wherein said selection is performed by touching a button or key image displayed on the screen, and a button or key image touch-judgment unit determines the touched button or key image.

23. The interface of claim 21 wherein said selection is performed using the buttons or keys of a data apparatus.

24. A program for executing said first to third processes on a computer.

25. A program for executing said first to sixth processes on a computer.

26. A program for executing said first to thirteenth processes on a computer.

27. A program for executing said first to fifteenth processes on a computer.
